# EUROPÄISCHE PATENTSCHRIFT

(11) **EP 2 225 117 B1**
(45) Veröffentlichungstag und Bekanntmachung des Hinweises auf die Patenterteilung: **25.05.2011**
(21) Anmeldenummer: 08868259.6
(22) Anmeldetag: 23.12.2008
(51) Int. Cl.: B60J 3/02

(54) **SONNENBLENDE MIT BELEUCHTUNGSEINRICHTUNG**
SUN VISOR WITH LIGHTING DEVICE
PARE-SOLEIL AVEC DISPOSITIF D'ÉCLAIRAGE

(30) Priorität: 28.12.2007 DE 102007063357; 12.06.2008 DE 102008027923
(43) Veröffentlichungstag der Anmeldung: 08.09.2010
(73) Patentinhaber: Johnson Controls Interiors GmbH & Co. KG, 47929 Grefrath (DE)
(72) Erfinder: WELTER, Patrick, F-57730 Lachambre (FR)
(74) Vertreter: Wolff, Felix
(86) Internationale Anmeldenummer: PCT/EP2008/011080
(87) Internationale Veröffentlichungsnummer: WO 2009/083235

(56) Entgegenhaltungen:
- EP-A- 0 265 404
- DE-A1- 4 440 195
- US-A- 3 598 987
- US-A- 4 421 355
- US-A- 4 947 296
- US-A- 5 473 516
- US-A- 5 575 552
- US-B1- 6 692 060

## Beschreibung

Die Erfindung betrifft Sonnenblendenkörper mit einer Lichtquelle und einem Spiegel und einer Abdeckung des Spiegels

Sonnenblendenkörper mit einer Lichtquelle sind aus dem Stand der Technik, beispielsweise der DE 39 30 122 C2 oder der DE 10 2006 008 297 A1 bekannt. Die Sonnenblendenkörper aus dem Stand der Technik haben jedoch den Nachteil, dass sie vergleichsweise aufwendig herzustellen sind, vergleichsweise dick bauen und/oder dass die Ausleuchtung des Gesichts eines Fahrzeugsitzinsassen nichtzufriedenstellend ist.

Der Erfindung liegt die Aufgabe zugrunde, insbesondere bei dünnen Sonnenblenden eine zufriedene Ausleuchtung des Gesichts des Sitzinsassens herbeizuführen.

Gelöst wird die Aufgabe erfindungs gemäß durch die merkmale des Anspruchs 1

Erfindungsgemäß weist der Sonnenblendenkörper einen Spiegel und mindestens eine, vorzugsweise mehrere Lichtquellen auf. Der Spiegel und/oder die Lichtquellen können in den Sonnenblendenkörper eingelassen und/oder Teil einer gemeinsamen Kassette sein. Weiterhin erfindungsgemäß weist der Sonnenblendenkörper eine dem Spiegel zugewandte reflektierende Fläche auf; d.h. die reflektierende Fläche kann mit dem Spiegel zumindest teilweise betrachtet werden. Der Sonnenblendenkörper kann von einer Ruhestellung, in der er sich im Wesentlichen parallel zu dem Dach eines Kraftfahrzeuges befindet, reversibel in eine Gebrauchsstellung verbracht werden, in der er einen Fahrzeuginsassen vor Sonne schützt und/oder in der der Spiegel für einen Fahrzeuginsassen zur Betrachtung zur Verfügung steht.

Vorzugsweise weist der Spiegel eine Abdeckung auf, die zum Gebrauch des Spiegels reversibel wegklappbar ist. Besonders bevorzugt kann die Abdeckung beim Wegklappen einen beliebigen Winkel zwischen Spiegel und Abdeckung, insbesondere selbsthemmend, einnehmen. Dieser Winkel beträgt bevorzugt 70 - 110°. Vorzugsweise kann dieser Winkel von dem Fahrzeuginsassen eingestellt werden. Die Abdeckung kann Teil der oben erwähnten Kassette sein.

Erfindungsgemäß ist die reflektierende Fläche an dieser Abdeckung, insbesondere an deren dem Spiegel zugewandten Innenseite vorgesehen.

Vorzugsweise handelt es sich bei der reflektierenden Fläche um eine helle, insbesondere weiße oder metallisch aussehende Fläche.

Erfundungs gemäß ist die reflektierende Fläche lichtstreuend vorgesehen.

In einer bevorzugten Ausführungsform der vorliegenden Erfindung ist die Lichtquelle im Randbereich des Spiegels, besonders bevorzugt rechts und/oder links davon, angeordnet. Vorzugsweise sind mehrere Lichtquellen vorhanden.

Vorzugsweise ist die Lichtquelle für den Fahrzeuginsassen nicht sichtbar.

Erfindungs gemäß ist die Lichtquelle spottartig fokussiert ausgebildet, wobei die Lichtstrahlen ganz besonders bevorzugt in Richtung der reflektierenden Fläche gebündelt werden.

Vorzugsweise handelt es sich bei der Lichtquelle um eine LED, OLED und/oder eine Soffitte.

Vorzugsweise wird ein von der Lichtquelle ausgehender Lichtstrahl von der reflektierenden Fläche in Richtung eines Fahrzeugsitzinsassen reflektiert.

Erfindungsgemäß ist demnach vorgesehen, die Sonnenblende mit mindestens einer, spotartig fokussierten, Lichtquelle auszustatten, welche gegen einen an der Sonnenblende vorgesehenen Reflektor strahlt, durch den der Lichtstrahl in Richtung des betreffenden Sitzinsassen umlenkbar ist. Der Reflektor ist als nach oben schwenkbarer Deckel einer Spiegelkassette der Sonnenblende ausgebildet, wobei die in Schließstellung des Deckels dem Schminkspiegel zugewandte Flächenseite des Deckels in etwa rechtwinklig hochgeklappter Öffnungsstellung als Reflektor dient. Die betreffende Flächenseite des Reflektors ist vorzugsweise hell, insbesondere weiß, gefärbt und weist einen hohen Reflektionsgrad auf. Grundsätzlich kann der Reflektor jedoch auch unabhängig von der Spiegelkassette ausgebildet werden.

Im Folgenden wird die Erfindung anhand der Figuren 1-4 erläutert. Diese Erläuterungen sind lediglich beispielhaft und schränken den allgemeinen Erfindungsgedanken nicht ein.
- Figur 1: zeigt den Sonnenblendenkörper mit geschlossener Abdeckung.
- Figur 2: zeigt den Sonnenblendenkörper mit geöffneter Abdeckung.
- Figur 3: zeigt den Verlauf der Lichtstrahlen der lichtquelle.
- Figur 4: zeigt einen Schnitt durch die Anordnung gemäß Figur 3.

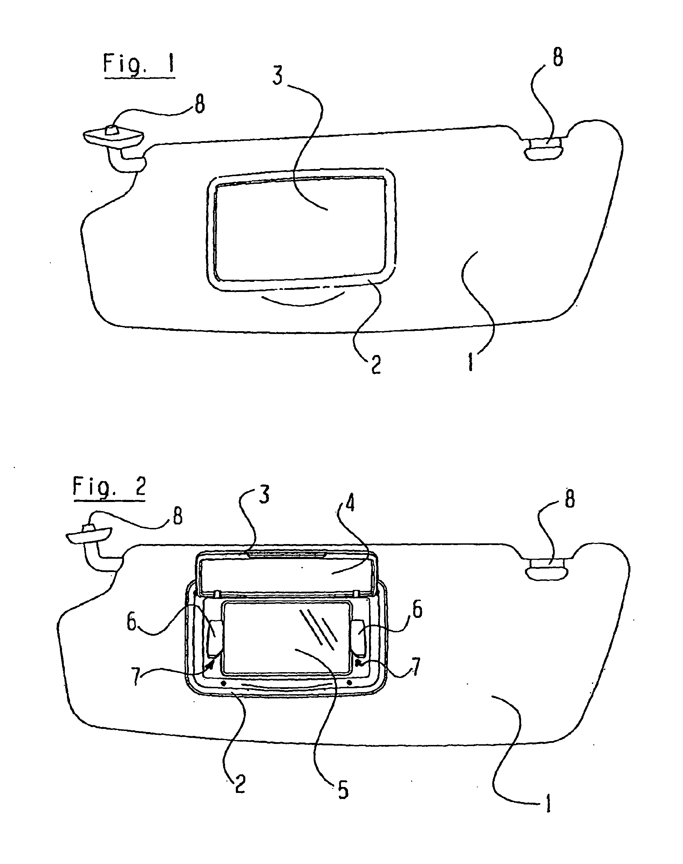

Die in Figur 1 gezeigte Sonnenblende besteht aus einem Sonnenblendenkörper 1, in welchen eine Spiegelkassette 2 mit einem in Schließstellung befindlichen, aus dieser um einen Winkel von mindestens 90° oder mehr nach oben klappbaren Deckel 3 eingelassen ist. Der Sonnenblendenkörper 1 ist seinerseits in Gelenken 8 aus seiner dachparallelen Staustellung in die abgebildete Verschattungs- Schminkstellung schwenkbar. Durch das Gelenk 8 oder durch die Gelenke 8 wird die Sonnenblende vorzugsweise auch mit elektrischer Energie versorgt.

Nach dem Hochklappen des Deckels 3 werden, wie in Figur 2 dargestellt, der Schminkspiegel 5 sowie Lichtquellen 7, beispielsweise LEDs, OLEDs und/oder Soffitten, in der Spiegelkassette 2 sichtbar. Der Deckel 3 ist vorzugsweise in einen beliebigen Winkel zwischen 0 und 160° relativ zum Spiegel 5, besonders bevorzugt selbsthemmend einstellbar. Alternativ oder zusätzlich gibt es mindestens eine geöffnete Stellung, in die die Abdeckung nach dem Öffnen einrastet oder in der die Abdeckung an einen Anschlag nach dem Öffnen anschlägt. Die Lichtquellen 7 bzw. die Lichtquelle 7 sind bzw. ist als spotartig, also fokussiert strahlende Lichtquelle/n 7 ausgebildet, welche nach dem Öffnen des Deckels 3 und der damit verbundenen Betätigung eines elektrischen Schalters schräg nach oben in Richtung der als Reflektor 4 ausgebildeten, inneren Flächenseite des Deckels 3 strahlt/strahlen. Insbesondere weist die Lichtquelle 7 einen Öffnungswinkel ihres Lichtkegels des abgestrahlten Lichts auf, der im Bereich von 5° bis 50°, bevorzugt von 10° bis 40°, besonders bevorzugt von 15° bis 30° liegt. Im Ausführungsbeispiel ist für jede Lichtquelle 7 (beispielsweise zwei Lichtquellen 7, die beiderseits des Schminkspiegels 5 angeordnet sind) ein Lichtkanal 6 bzw. eine Vertiefung 6 angeordnet, der bzw. die eine Abschattungswirkung (im Sinne einer Blende) aufweist.

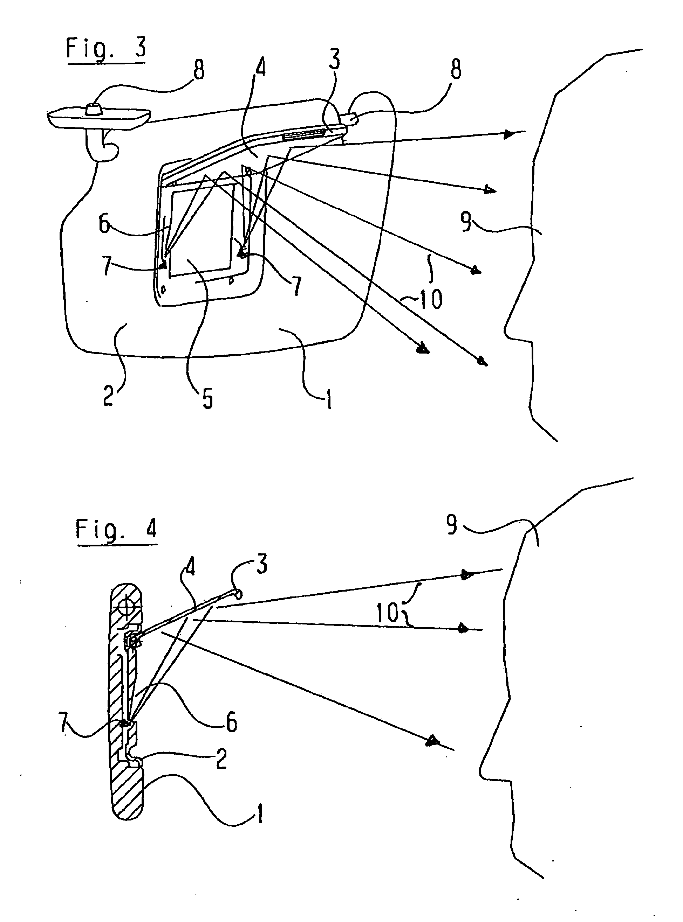

Wie aus den Figuren 3 und 4 ersichtlich, werden die von der Lichtquelle 7 ausgehenden Lichtstrahlen 10 vom Reflektor 4 in Richtung des Sitzinsassen 9 umgelenkt, wobei die dabei auftretende Reflexion bzw. Streuung durch die Oberflächenstruktur des Reflektors 4 beeinflusst werden kann.

Durch den erfindungsgemäßen Sonnenblendenkörper wird nur das Gesicht des Fahrzeuginsassen beleuchtet, während das Umfeld des Gesichtes weitgehend dunkel bleibt.

### Bezugszeichenliste

- 1: Sonnenblendenkörper
- 2: Spiegelkassette
- 3: Deckel
- 4: Reflektor
- 5: Schminkspiegel
- 6: LichtkanalNertiefung
- 7: Lichtquelle
- 8: Gelenk
- 9: Sitzinsasse
- 10: Lichtstrahl

## Patentansprüche

1. Sonnenblendenkörper (1) mit einer Lichtquelle (7) und einem Spiegel (5), wobei eine dem Spiegel (5) zugewandte Fläche (4) reflektierend ausgebildet ist und die Fläche (4) Teil einer Abdeckung (3) des Spiegels (5) ist, die hochklappbar ist, **dadurch gekennzeichnet, dass** die Lichtquelle (7) spottartig ist und schräg nach oben in Richtung der reflektierenden Fläche (4) gerichtet ist, die lichtstreuend vorgesehen ist.

2. Sonnenblendenkörper (1) nach Anspruch 1, **dadurch gekennzeichnet, dass** die Lichtquelle (7) im Randbereich des Spiegels (5) angeordnet ist.

3. Sonnenblendenkörper (1) nach einem der voranstehenden Ansprüche, **dadurch gekennzeichnet, dass** die Lichtquelle (7) eine LED, OLED und/oder eine Soffitte.

4. Sonnenblendenkörper (1) nach einem der voranstehenden Ansprüche, **dadurch gekennzeichnet, dass** der Winkel zwischen Spiegel (5)und Abdeckung (3) einstellbar ist.

5. Sonnenblendenkörper (1) nach einem der voranstehenden Ansprüche, **dadurch gekennzeichnet, dass** ein von der Lichtquelle (7) ausgehender Lichtstrahl (10) von der reflektierenden Fläche (4) in Richtung eines Fahrzeugsitzinsassen reflektiert wird.

## Claims

1. Sun visor body (1) with a light source (7) and a mirror (5), with a surface (4) facing the mirror (5) being of reflective design and the surface (4) being part of a cover (3) of the mirror (5), which cover can be folded up, **characterized in that** the light source (7) is of spot-type design and is directed obliquely upwards in the direction of the reflecting surface (4), which is provided in a light-scattering fashion.

2. Sun visor body (1) according to Claim 1, **characterized in that** the light source (7) is arranged in the edge region of the mirror (5).

3. Sun visor body (1) according to one of the preceding claims, **characterized in that** the light source (7) is an LED, OLED and/or a tubular lamp.

4. Sun visor body (1) according to one of the preceding claims, **characterized in that** the angle between mirror (5) and cover (3) is adjustable.

5. Sun visor body (1) according to one of the preceding claims, **characterized in that** a light beam (10) emanating from the light source (7) is reflected by the reflecting surface (4) in the direction of a vehicle seat occupant.

## Revendications

1. Corps de pare-soleil (1) comprenant une source de lumière (7) et un miroir (5), dans lequel une surface (4) tournée vers le miroir (5) est réalisée de façon à être réfléchissante et la surface (4) constitue une partie d'un capot (3) du miroir (5) qui peut être repliée vers le haut, **caractérisé en ce que** la source de lumière (7) est du type spot et est inclinée vers le haut dans la direction de la surface réfléchissante (4) qui est prévue pour diffuser la lumière.

2. Corps de pare-soleil (1) selon la revendication 1, **caractérisé en ce que** la source de lumière (7) est disposée dans la région de bord du miroir (5).

3. Corps de pare-soleil (1) selon l'une des revendications précédentes, **caractérisé en ce que** la source de lumière (7) est une LED, une OLED et/ou une lampe navette.

4. Corps de pare-soleil (1) selon l'une des revendications précédentes, **caractérisé en ce que** l'angle formé entre le miroir (5) et le revêtement (3) est réglable.

5. Corps de pare-soleil (1) selon l'une des revendications précédentes, **caractérisé en ce qu'**un rayon lumineux (10) émanant de la source de lumière (7) est réfléchi par la surface réfléchissante (4) dans la direction d'un passager du véhicule.
